(19) Europäisches Patentamt
European Patent Office
Office européen des brevets

(11) **EP 3 358 079 B1**

(12) **EUROPÄISCHE PATENTSCHRIFT**

(45) Veröffentlichungstag und Bekanntmachung des Hinweises auf die Patenterteilung:
**25.12.2019  Patentblatt 2019/52**

(21) Anmeldenummer: **18150046.3**

(22) Anmeldetag: **02.01.2018**

(51) Int Cl.:
*E01B 29/04* *(2006.01)*       *E01B 35/12* *(2006.01)*
*B61K 9/08* *(2006.01)*        *B61D 15/12* *(2006.01)*
*B61L 23/04* *(2006.01)*       *B61L 25/02* *(2006.01)*
*G01B 21/30* *(2006.01)*

(54) **VERFAHREN UND VORRICHTUNG ZUM MESSEN UND BERECHNEN EINER GLEISLAGE**

METHOD AND DEVICE FOR MEASURING AND COMPUTING A TRACK BED

PROCÉDÉ ET DISPOSITIF POUR MESURER ET CALCULER UNE VOIE FERRÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.02.2017  AT 500942017**

(43) Veröffentlichungstag der Anmeldung:
**08.08.2018  Patentblatt 2018/32**

(73) Patentinhaber: **HP3 Real GmbH**
**1010 Wien (AT)**

(72) Erfinder: **Lichtberger, Bernhard**
**4230 Pregarten (AT)**

(74) Vertreter: **Hübscher & Partner Patentanwälte GmbH**
**Spittelwiese 4**
**4020 Linz (AT)**

(56) Entgegenhaltungen:
**EP-A1- 1 028 193        EP-A1- 2 957 674**
**EP-A2- 0 652 325        EP-A2- 1 283 301**
**WO-A1-2016/061602        WO-A1-2016/090401**
**CN-A- 105 316 986**

**Beschreibung**

Die Erfindung bezieht sich auf ein Verfahren zum Messen und Berechnen einer Gleislage mit einem gleisfahrbaren Gleismesswagen mit wenigstens zwei an einem Maschinenrahmen abgestützten Radachsen, und mit einer Vorrichtung zum Anpressen der Räder an die Schiene und einem Odometer zur Messung einer Bogenlänge der Schiene. Ferner bezieht sich die Erfindung auf eine Vorrichtung zur Messung einer Gleislage mit einem gleisfahrbaren Gleismesswagen mit den vorstehend genannten Merkmalen.

Ein gattungsgemäßes Verfahren sowie eine gattungsgemäße Vorrichtung sind beispielsweise aus WO 2016/090401 A1 oder CN 105 316 986 A bereits bekannt.

Die meisten Gleise für die Eisenbahn sind als Schotteroberbau ausgeführt. Die Schwellen liegen dabei im Schotter. Durch die wirkenden Radkräfte der darüberfahrenden Züge werden unregelmäßige Setzungen im Schotter und Verschiebungen der seitlichen Lagegeometrie des Gleises hervorgerufen. Durch die Setzungen des Schotterbettes treten Fehler in der Längshöhe, der Überhöhung (im Bogen) und der Richtlage auf. Werden bestimmte Komfortgrenzwerte oder Sicherheitsgrenzwerte dieser geometrischen Größen überschritten, dann werden Instandhaltungsarbeiten durchgeführt.

Die Behebung und Berichtigung dieser geometrischen Gleisfehler wird heute meist mit Gleisbaumaschinen durchgeführt. Damit das Gleis nach derartigen Gleisgeometrieverbesserungsarbeiten wieder dem Betrieb frei gegeben werden kann, sind die Eisenbahnoberbaumaschinen mit so genannten Abnahmemessanlagen und Abnahmeschreiberanlagen ausgestattet. Für die Qualität der Gleislage nach der Verbesserung durch Oberbaumaschinen oder sonstiger Methoden sind Abnahmetoleranzen festgelegt. Diese stellen die Mindestanforderungen der Qualität der erzeugten geometrischen Verbesserungen dar. Nachgewiesen werden diese durch die Abnahmemessanlagen und Abnahmeschreiberanlagen.

Die dabei zu nennenden wichtigen zu berichtigenden und aufzuzeichnenden Größen sind die Verwindung, die Längshöhe des Gleises, die Richtung oder Seitenlage des Gleises, und die Querneigung oder Überhöhung des Gleises. Eine Eisenbahnoberbaumaschine wie eine Gleisstopfmaschine stellt die Gleisgeometrie, die durch die Belastung der Züge verschlechtert wurde, wieder her. Dazu wird das Gleis mittels elektrohydraulisch gesteuerten Hebe- Richteinrichtungen in die Sollposition gehoben und gerichtet.

Je geringer die Restfehler nach einer Instandhaltungsarbeit einer Oberbaumaschine sind, desto geringer auch die wechselwirkenden Kräfte des Zugverkehrs, desto langsamer verschlechtert sich die Gleisgeometrie unter dem Zugverkehr, um so größer die Dauerhaftigkeit der Gleislage. Es ist daher wünschenswert, die Gleisgeometrie möglichst an die Soll-Lage heranzuführen, weil damit anschließend erhebliche Kosten und Aufwand gespart werden können. Je schneller die Züge fahren, um so kleiner sind die zulässigen Toleranzwerte. Für fahrende Züge ist die Berichtigung der Fehler (Fehlerwellenlänge typisch von 3 m bis 70m) wesentlich. Die zu berücksichtigenden Fehlerwellenlängen richten sich nach der Streckengeschwindigkeit.

Zur Berichtigung von Gleisfehlern haben sich verschiedene Gleisrichtverfahren herausgebildet. Einerseits gibt es Relativverfahren die die Gleislage nur glätten und andererseits Absolutverfahren. Bei den Absolutverfahren werden die Gleislagen nach vorgegebenen Sollgeometrien berichtigt. Die Sollgeometrien der Eisenbahngleise stehen als Gleislagepläne zur Verfügung und können nach Eingabe in den Steuercomputer der Oberbaumaschine zur Berechnung der systematischen Fehler unter Kenntnis des Verhaltens der Messsysteme benutzt werden. Sind die absoluten Korrekturwerte für das vordere Ende der Maschinenmesseinrichtung bekannt, dann wird das vordere Ende der Maschinenmesseinrichtung auf der Sollkurve geführt und das hintere Ende auf dem bereits berichtigten Gleis. An der Arbeitsstelle wird der Richtvorgang durchgeführt. Die Position der Stopfmaschine in der Gleislängsachse wird meist mit einem Odometer bestimmt.

Ist die Sollgeometrie unbekannt, dann wird mit den bekannten Verfahren die Gleislage meist mit einem Sehnensystem für die Richtung und einem Sehnensystem für die Längshöhe vor der Arbeit gemessen. Die Quer-Ist-neigung wird dabei mit einem Pendel gemessen. Pendel sind abhängig von den während der Messfahrt auftretenden Beschleunigungen. Insbesondere die Zentrifugalbeschleunigung bei der Messfahrt im Bogen führt zu großen Fehlern. Dies begrenzt typischerweise die Messgeschwindigkeit auf einen Bereich von etwa 5 km/h. Die Messung der Gleislage über Sehnensysteme ist mit einer Übertragungsfunktion behaftet, d.h. das gemessene Signal weicht vom tatsächlichen Gleisfehler hinsichtlich seiner Form, Verstärkung und Phasenlage ab. Die Messwerte sind den Krümmungen des Gleises proportional. Die Messung der Höhenlage des Gleises mittels eines Sehnenmesssystems liefert ebenfalls mit einer Übertragungsfunktion behaftete krümmungsproportionale Signale. Neigungswechsel (Übergang von einer Neigung in eine andere) können aus den Messdaten nicht ermittelt werden, da zwischen Krümmungsfehlern der Gleislage und zwischen Neigungsübergängen die sich ebenfalls als Krümmungsdifferenz bemerkbar machen nicht unterschieden werden kann. Zudem ist aus den Krümmungsmessungen der Höhe kein Rückschluss auf die tatsächliche Neigung möglich (die Maschine steht in einem bestimmten Gefälle kann aber diese nicht aus den Messungen ableiten, da das gesamte Messsystem in der Neigung steht und nur eine Relativmessung durchführt).

Für die Optimierung der Gleislage nach den bekannten üblichen Verfahren werden die gemessenen Krümmungen zu einer Soll-Krümmungskurve geglättet. Dann wird die Differenz zwischen dem gemessenen und dem geglätteten "Soll-Krümmungsbild" gebildet. Mittels digitaler Filter wird eine genäherte inverse Übertragungsfunktion gebildet (siehe z.B. DE 103 37 976 B4). Diese inverse Übertragungsfunktion wird nun auf die Differenz zwischen dem gemessenen und dem geglätteten "Soll-Lage-Krümmungsbild" angewendet. Dadurch erhält man näherungsweise den Gleisfehler. Überschreitet der zu berichtigende Fehler maximal zulässige Korrekturwerte dann muss mittels komplizierter Verfahren das "Soll-Lage-Krümmungsbild" entsprechend modifiziert werden. Ähnlich verhält es sich mit Zwangslagen oder Zwangspunkten. Eine Zwangslage wie eine Brücke kann z.B. erfordern seitliche Verschiebungen nicht zuzulassen. Bei der Längshöhe ergibt sich im Gegensatz zur Richtung ein weiterer Bearbeitungsschritt, da nur gehoben und nicht abgesenkt werden kann. Der sich aus der Optimierung ergebende Hebe-Senk-Verlauf muss positiv definit werden. Dazu werden die Hebekorrekturen so angehoben, dass keine negativen (Senkungen) mehr auftreten. Diese Berechnungen sind deswegen schwierig und ungenau weil von Krümmungsbildern ausgegangen wird. Fehler entsprechen ungefähr einer zweifachen Integration der Krümmungsdifferenzen, diese aber sind auch noch mit einer Übertragungsfunktion behaftet.

Stand der Technik sind Sehnenmesssysteme (DE 32 27 724 C2) und Pendel oder Neigungsmesser zum Messen der Längshöhe, der Richtung und der Querneigung (GB 2 268 021 B). Stand der Technik sind auch Odometer zur Bestimmung der Position des Messsystems auf dem Gleis. Stand der Technik sind auch Satellitennavigationssysteme (wie GPS, Navstar oder Galileo). Auch Stand der Technik sind Trägheitsnavigationssysteme (INS) oder inertiale Navigationssysteme die aus einer zentralen Sensoreinheit mit meist drei Beschleunigungs- und Drehratensensoren bestehen. Durch Integration der von der IMU (inertiale Messeinheit) gemessenen Beschleunigungen und Drehraten werden in einer INS laufend die räumliche Bewegung des Fahrzeugs und daraus die jeweilige geografische Position bestimmt. INS-Systeme arbeiten mit Datenraten von etwa 100-1000 Hz und hohen Genauigkeiten und geringer Drift (< 0,01° bis 0,05°/ Stunde). Sie kalibrieren sich in Pausen wenn sie nicht bewegt werden automatisch. Der Hauptvorteil eines INS ist, dass dieses referenzlos betrieben werden kann. Die Beschleunigung kann mittels fahrzeugfester Beschleunigungssensoren ("strap-down") gemessen werden. Natürlich kann prinzipiell auch nur eine IMU eingesetzt werden, in diesem Falle muss der absolute Rollwinkel durch einen unabhängigen Neigungsmesser gemessen werden. Vorteile dieser Messsysteme sind unabhängig von der Zentrifugalbeschleunigung messbare Rollwinkel, eine in weiten Bereichen geltende Übertragungsfunktion des Systems von =1, d.h. es wird die tatsächliche Spur des Fahrzeuges im Raum gemessen ohne Verzerrungen der Form, der Verstärkung bzw. der Phasenlage der Gleisfehler. Aus dieser drei-dimensionalen Spur des Fahrzeuges im Raum und einer äquidistanten Messung über Odometer werden 3D-Koordinaten gewonnen. Durch Projektion auf die x-y-Ebene erhält man das

Ortsbild des Gleises und die Projektion auf die y-z-Ebene ergibt den Höhenschnitt. Zusätzlich können Satellitennavigationsdaten (z.B. über GPS) aufgezeichnet werden. Stand der Technik sind auch so genannte "Nord"-basierte INS-Systeme die absolute Winkelabweichungen des Roll-, Gier- und Nickwinkels bezogen auf ein nach Nord ausgerichtetes System liefern. Der x-Einheitsvektor zeigt dabei nach Norden, der z-Einheitsvektor in Richtung der Schwerkraft und der y-Einheitsvektor ist dann so ausgerichtet dass sich ein Orthonormalsystem ausbildet. Die absoluten Winkelabweichungen stellen einen Einheitsvektor dar der die Richtung des Messwagens auf welchem sich das INS-System befindet zeigt.

Nachteilig bei den bekannten Verfahren zur Gleislageoptimierung und Berechnung der Gleisfehler aus einer Messfahrt sind, die mit einer Übertragungsfunktion behafteten Messwerte, die nur näherungsweise abzubildende inverse Übertragungsfunktion der Sehnenmesssysteme, die negative Beeinflussung der Neigungsmesser durch äußere wirkende Beschleunigungen, die nur schwierig zu erfüllenden Randbedingungen wie Zwangslagen, Zwangspunkte oder maximal zulässige Korrekturwerte bei der Optimierungsrechnung. Nachteilig ist auch die geringe Messgeschwindigkeit die während einer Messfahrt zulässig ist. Ein weiterer Nachteil ist, dass Sehnenmesssysteme eine örtliche Ausbreitung in Maschinenlängsrichtung von 10-20 m haben. Häufig werden Oberbaumaschinen daher mit Anhängern ausgerüstet unter denen das Messsystem untergebracht ist. Das erhöht die Kosten und die Länge der Maschinen. Werden am Anhänger zusätzliche Arbeitsaggregate wie Kehrbürste, Schottersilo oder dynamischer Gleisstabilisator angebracht, dann ist der Einsatz von Sehnenmesssystemen unmöglich. Nachteilig bei den bekannten Verfahren zur Gleislageoptimierung ist auch, dass die absolute Neigung des Gleises und die Neigungswechsel aus den Messdaten nicht zu eruieren sind. Die nicht bekannte Lage der Neigungswechsel nach den bekannten Verfahren führt in diesen Bereichen zu einer fehlerhaften Gleislageberichtigung durch die Oberbaumaschinen. Als weiterer Nachteil bei den bekannten Verfahren ist anzuführen, dass wegen der verwendeten digitalen nicht rekursiven Filter und deren notwendigem Einlaufweg bis etwa zum 13 fachen des kurzen Sehnenabschnittes vor dem eigentlich zu berichtigenden Gleis gemessen werden muss (typischerweise liegt a im Bereich von 4-7 m - dies ergibt Vor- und Nachmesslängen von 50 bis 90 m). Bei den geringen Messgeschwindigkeiten die die bekannten Verfahren aufweisen ist dafür ein entsprechender Zeitaufwand notwendig. Die bekannten Sehnenverfahren weisen zudem den Nachteil eines Offsets auf (z.B. durch Messradverschleiß, Ungenauigkeiten der Messgeber, der Mitnehmer in denen die Sehne läuft, den Schwingungen der Sehne etc.) der regelmäßig kontrolliert werden muss. Die Neukalibration der Sehnenmesssysteme ist aufwändig und kostspielig.

Der Erfindung liegt somit die Aufgabe zugrunde ein Verfahren zur Messung einer Gleislage und zur Berechnung der Gleislage nach einer Messfahrt anzugeben, das zur Optimierung der Gleislage unter Berücksichtigung von Randbedingungen wie Zwangslagen, Zwangspunkten und maximal zulässigen Gleislagekorrekturen mittels eines Trägheitsnavigationssystems (INS) oder eines inertialen Messsystems (IMU) und eines Odometers geeignet ist. Die Nachteile der bekannten Systeme wie Beeinflussung durch äußere wirkende Beschleunigungen, limitierte Messgeschwindigkeit, Einfluss einer Übertragungsfunktion des Sehnenmesssystems, zu kalibrierende Offsets des Sehnenmesssystems, schwer zu erfüllende Randbedingungen bei der Optimierung und den Aufbau eines zusätzlichen Anhängers sollen vermieden werden.

Die Erfindung löst die gestellte Aufgabe mit den Merkmalen der Ansprüche 1 bis 10. Vorteilhafte Weiterbildungen der Erfindung sind in den Unteransprüchen dargestellt.

Dadurch, dass auf einen Messwagen mit 2 Radsätzen die zueinander drehbar ausgeführt sind ein INS-System aufgebaut wird. Zusätzlich kann der Messwagen so aufgebaut werden, dass die Drehvorrichtung der Radsätze mit einer Spurweitenmessung ausgestattet wird. Damit kann die geometrische Lage beider Schienen in einem Messvorgang bestimmt werden. Über die genaue Kenntnis der Spurweite können die Radaufstandspunkte bestimmt werden, was die Genauigkeit der Überhöhungsbestimmung erhöht. Mit dem Messwagen verbunden wird ein Odometer welches die Distanz die der Messwagen auf dem Gleis zurücklegt misst. Der Messwagen wird seitlich an eine Schiene während der Messung angelegt oder über die Spurweitenmessung beidseitig angepresst. Die INS misst daher die Tangente der Gleisrichtung und die Längsneigung so wie die Querneigung des Messwagens auf dem Gleis (die Überhöhung). In z.B. äquidistanten Schritten (typisch sind 0,25; 0,5 oder 1m - auch eine quasikontinuierliche Aufzeichnung ist wegen der hohen Messraten der INS möglich) werden die Messdaten der INS an der entsprechenden Stelle abgespeichert. Zu jedem Messpunkt werden außer den INS-Daten auch die exakte zurückgelegte Bogenlänge (oder der "Gleiskilometer") abgespeichert.

Das erfindungsgemäße Verfahren liefert eine optimierte Soll-Gleislage in Höhe und Richtung sowie die dazugehörigen Korrekturwerte auf die mit Odometer gemessenen Bogenlänge. Ein weiterer Vorteil neben der höheren Messgeschwindigkeit ist die Robustheit der INS bzw. IMU generell gegenüber äußeren störenden Beschleunigungen. Die Verdichtung des Schotterbettes erfolgt mit 35 Hz, Oberbaumaschinen werden mit Dieselmotoren betrieben und weisen deshalb einen störenden Vibrations- und Beschleunigungspegel auf. Es ergibt sich zusätzlich durch das erfindungsgemäße Verfahren der Vorteil, dass die Lage der Neigungswechsel und die absoluten Neigungen exakt bestimmbar sind und damit qualitativ erheblich genauere Korrekturwerte für die Gleisbaumaschine vorgebbar sind. Eine höhere erzielte Gleislagegenauigkeit verlängert die geometrische Haltbarkeit des Gleises und verringert deutlich die Kosten der Instandhaltung. Ein weiterer Vorteil ist die Begrenzung der Vor- und Nachmesslängen auf etwa eine Maschinenlänge (typisch 10-20m). Ebenso vorteilhaft ist, dass mit dem erfindungsgemäßen Verfahren exakte Krümmungsbilder und Längsneigungsbilder ermittelbar sind, die der üblichen Darstellung der Eisenbahn entsprechen. Damit kann bei einer nachfolgenden Durcharbeitung auf diese Solldaten zurückgegriffen werden. Sie bilden außerdem eine hervorragende Grundlage für den Vermessungsdienst der Bahn für eine Festlegung der Soll-Geometrie der bislang nicht bekannten Gleisgeometrie der Strecke. Da die Soll-Pfeilhöhen und Soll-Längshöhen mathematisch aus den Soll-Ortsbildern und den Soll-Neigungsbildern bestimmt werden, tritt vorteilhaft bei dem erfindungsgemäßen Verfahren kein Offset des Messsystems auf. Damit entfallen aufwändige Kalibrierverfahren.

Nach Beendigung der Messfahrt wird die Spur des Messwagens im Raum aus den Absolutwinkeldifferenzen zum nordbasierten Koordinatensystem der aufgezeichneten INS-Werte für jeden Messpunkt (Roll-, Gier- und Nickwinkel) berechnet. Als Anfangsbedingung wird günstiger Weise der Anfangswinkelvektor in die Anfangsrichtung des Messwagens zu Beginn der Messfahrt gelegt. Die Integration der Spur (Errechnen der 3D-Koordinaten der Messfahrpositionen) erfolgt nach:

Durch Setzen von z=0 in den 3D-Koordinaten erhält man das so genannte Ortsbild f(xy). Durch Setzen von x=0 wird der Längsschnitt g(y,z) gebildet. Der Längsschnitt zeigt den Höhenverlauf und auch die Neigungswechsel (Übergang von einer Neigung auf eine andere). Abhängig von der Streckenklasse werden Basislängen definiert. Das Ortsbild wird durch eine nach Streckentyp vorgegebene Basislänge in Abschnitte geteilt. Die Glättung erfolgt z.B. mittels kubischer Splines nach der Methode der Summe der kleinsten Quadrate der Abweichungen. Diese Splines werden miteinander zu einer geglätteten Soll-Ortskurve verbunden. Anschließend werden die Korrekturwerte durch die maximal zulässigen Korrekturwerte beschnitten. Zwangspunkte werden durch eine stetige durch die Übergangspunkte und die Zwangspunkte verlaufende mathematische Funktion verbunden. Die bisherige Soll-Ortskurve wird zu einer neuen modifizierten durch Überlagerung umgeformt. Geringfügige Änderungen bleiben für den Fahrzeuglauf ohne Auswirkungen. Ähnlich wird bei Zwangslagen verfahren. Daraus ergeben sich schließlich die modifizierte und anzuwendende Soll-Ortskurve. Die Differenzen zu der Soll-Kurve der Richtung sind die Richt-Korrekturwerte die an die Oberbaumaschine übergeben werden. Damit die Oberbaumaschine mit Ihrem Sehnensystem die Soll-Kurve der Richtung verarbeiten kann, muss diese noch auf die Sehnenmesssystemwerte (Pfeilhöhe für die Richtung) umgerechnet werden. Dies geschieht rechnerisch in dem eine Sehne fortlaufend in die Sollkurve der Richtung hineingerechnet wird. Die daraus berechnete Soll-Pfeilhöhe wird der Oberbaumaschinensteuerung übergeben. Damit kann die Oberbaumaschine die Gleiskorrektur in der Richtung durchführen.

Für die Höhe (x=0 gesetzt) ergibt sich der Höhenverlauf (g(y,z) erfindungsgemäß in absoluten Höhenwerten.

4

Der Übergang von einer Neigung auf die nächste kennzeichnet einen Neigungswechsel der in den Daten (nach Filterung des Ist-Höhenverlaufs mit einem Digitalfilter welches nur langwellige Änderungen zulässt (z.B. > 50m) leicht bestimmbar ist (z.B. die 2. Ableitung des gefilterten Höhenverlaufs macht den Neigungswechsel deutlich bestimmbar). Sind die Neigungswechsel so bestimmt werden zwischen diesen Regressionsfunktionen gerechnet (z.B. Regressionsgeraden). Die Verbindung zwischen diesen einzelnen Regressionskurven erfolgt durch Ausgleichskurven höherer Ordnung z.B. kubische Splines (mit bestimmter typischer Ausrundungslänge z. B. 6m). Das Ergebnis ist eine durchgehende stetige mathematische Funktion als Soll-Höhenverlauf. Anschließend werden die Differenzen zwischen gemessener Ist-Höhenlage und Soll-Höhenlage gebildet. Die Differenzen entsprechen den durchzuführenden Korrekturen und werden so angehoben, dass keine negativen Werte auftreten und sich reine positive Hebewerte ergeben. Damit die Oberbaumaschine mit Ihrem Sehnensystem den Sollhöhenverlauf verarbeiten kann, muss diese noch auf die Sehnenmesssystemwerte (Längshöhe) umgerechnet werden. Dies geschieht rechnerisch in dem eine Sehne fortlaufend in die Sollkurve der Höhenlage hineingerechnet wird. Die daraus berechnete Soll-Längshöhe und die Hebewerte werden der Oberbaumaschinensteuerung übergeben. Damit kann die Oberbaumaschine die Gleiskorrektur in der Längshöhe durchführen.

Bei perfekter Arbeit ergeben sich die korrigierten Gleislagen korrespondierend zum Verlauf der geglätteten Soll-Ortskurve und dem Soll-Höhenverlauf unter Einhaltung der Randbedingungen wie Zwangslage, Zwangspunkte oder maximalen Korrekturwerten.

Das hier beschriebene System kann natürlich auch als eigenes Messsystem zur Erstellung eines Abnahmeschriebes benutzt werden, mit dem Vorteil, dass kein räumlich ausgedehntes Messsystem vorhanden ist und damit ein Anhänger notwendig wäre. Verbunden mit diesem Verfahren ist natürlich der Vorteil die Messaufzeichnung bei Geschwindigkeiten mit bis zu 80km/h durchzuführen. Dadurch ergibt sich eine enorme Zeitersparnis für die Messfahrt gegenüber den vorhandenen Systemen, die ja typischerweise mit nur etwa 5 km/h durchgeführt wird. Wird das Ortsbild zwei mal mathematisch nach der Bogenlänge differenziert ergibt sich die Krümmung. Das Krümmungsbild ist die gängige Darstellung bei der Eisenbahn. Ein weiterer Vorteil ist, dass bestimmte Lageveränderungen des Gleises (z.B. eine Verschwenkung im Bahnhofsbereich) direkt dem Soll-Ortsbild überlagert werden kann. Die Oberbaumaschine setzt dies dann nach Übergabe der aus dem Soll-Ortsbild gewonnenen Steuerdaten einfach um. Derartige Vorgaben in einem Krümmungsbild sind nicht möglich. Es ergibt sich zusätzlich durch das erfindungsgemäße Verfahren der Vorteil, dass die Lage der Neigungswechsel und die absoluten Neigungen exakt bestimmbar sind und damit qualitativ erheblich genauere Korrekturwerte für die Gleisbaumaschine vorgebbar sind.

In der Zeichnung ist der Erfindungsgegenstand beispielsweise schematisch dargestellt. Es zeigen

Fig. 1    Grundriss und Aufriss eines erfindungsgemäßen Gleismesswagens mit INS-Einheit,
Fig. 2    Prinzipdarstellung sehnenbasiertes Präzisionsgleisberichtigungsverfahren,
Fig. 3    Schema nordbasierte 3D-Gleiskoordinaten,
Fig. 4    Schema 3D-Gleiskoordinaten - Ermittlung des Ortsbildes und des Längsneigungsbildes,
Fig. 5    Schema der Bildung der optimierten Soll-Gleislage mit Hilfe kubischer Ausgleichs-Splines,
Fig. 6    Detaildarstellung der glatten Verbindung zwischen Ausgleichs-Splines,
Fig. 7    schematische Darstellung der Bildung einer Soll-Gleislage unter Berücksichtigung eines einzelnen Zwangspunktes,
Fig. 8    schematische Darstellung der Bildung einer Soll-Gleislage unter Berücksichtigung einer Zwangslage
Fig. 9    Längshöhenschnitt mit ausgeglichener Soll-Höhenlage und Neigungswechsel und Höhenkorrekturwerte

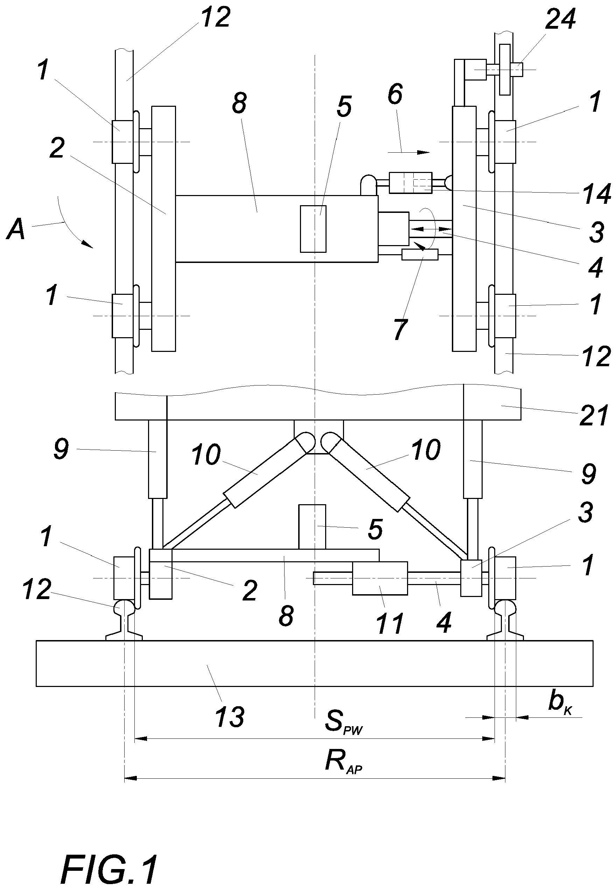

Fig. 1 zeigt erfindungsgemäß einen Gleismesswagen A mit einer INS-Einheit 5 die auf dem verbindenden Messwagenrahmen 8 angeordnet ist. Der Messwagen A läuft auf 4 Rädern 1 auf den Schienen 12. Die Räder 1 einer Seite sind jeweils miteinander starr verbunden 2, 3. Über eine Achse 4 sind die beiden gegenüberliegenden Radseiten drehbar zueinander gelagert. Damit kann der Gleismesswagen A in Gleisverwindungen eine definierte Lage einnehmen. Die Achse 4 ist in Axialrichtung verschiebbar ausgeführt. Die Verschiebung 6 wird durch einen Luftzylinder 14 so ausgeführt, dass beide Radpaare 2,3 links und rechts an der Schienenkante 12 laufen. Mittels eines Distanzsensors 7 wird die Ist-Spurweite SPW gemessen. Die Radaufstandsweite RAW wird wie folgt berechnet:

$$RAP = SPW + b_k$$

$b_k$    Schienenkopfbreite

Über zwei schräg stehende Zylinder 10 werden die Radpaare 1,2 und 1,3 mit einer Vertikalkraft und einer Horizontalkraft beaufschlagt. Dies stellt den Anlauf der Räder 1 an den Schienen 12 sicher und verhindert die Entgleisung. Vertikalzylinder 9 dienen dem Anheben in Verriegelungsstellung und dem Eingleisen des Messwagens zu Arbeitsbeginn bzw. Arbeitsende. 11 stellt schematisch eine Gleitlagerung dar in welcher die Torsionsachse 4 sowohl verdreht als auch quer verschoben werden kann. 21 stellt den Maschinenrahmen der Oberbaumaschine dar. An den Messwagen A ist ein Odometer (Wegmesseinrichtung) 24 angebracht welches die Bogenlänge des Gleises misst.

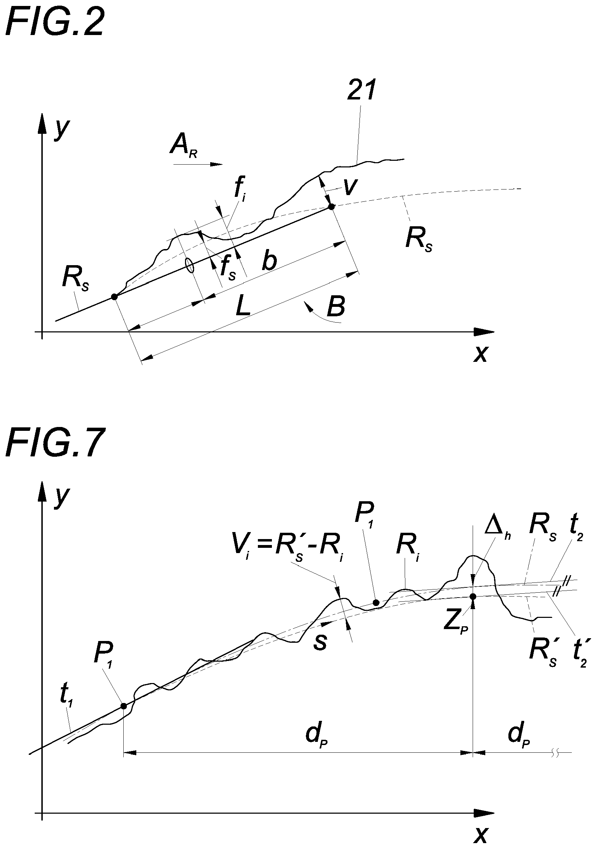

Fig. 2 zeigt schematisch die Wirkungsweise eines Präzisionsgleisberichtigungssystems B. Dieses besteht aus einer Sehne der Länge L mit Sehnenabschnitten a und b. Die Oberbaumaschine mit dem sehnenbasierten Berichtigungssystem arbeitet in Richtung AR. 21 stellt die zu berichtigende Gleislage dar und $R_s$ die optimierte Gleiss-Solllage. Im gezeichneten Bild geht man davon aus, dass das Gleis hinter der Sehne bereits berichtigt sei. In diesem Falle steht der hintere Punkt der Sehne auf dem berichtigten Gleis. Der vordere Punkt würde vorne allerdings auf der Ist-Gleislage 21 stehen. Für das Verfahren ist es also zunächst notwendig den Korrekturwert v zu ermitteln. Das vordere Sehnenende muss auf der Gleis-Solllage $R_s$ geführt werden. Dies kann z.B. dadurch erzielt werden, dass die Sehne vorne auf einer Querverstelleinrichtung geführt wird die genau um die Differenz v bei jedem Arbeitsschritt verstellt wird. Eine weitere Bedingung für die einwandfreie Funktion des Verfahrens ist die Vorgabe der Soll-Pfeilhöhe fs. Damit ergibt sich dann der notwendige Richtwert um die Gleis-Solllage $f_s$ zu erreichen zu

$$RW = f_s - f_i$$

RW    Richtwert

Für eine einwandfreie Funktion müssen also durch ein entsprechendes Verfahren die Soll-Pfeilhöhen $f_s$ und die Korrekturwerte v ermittelt werden.

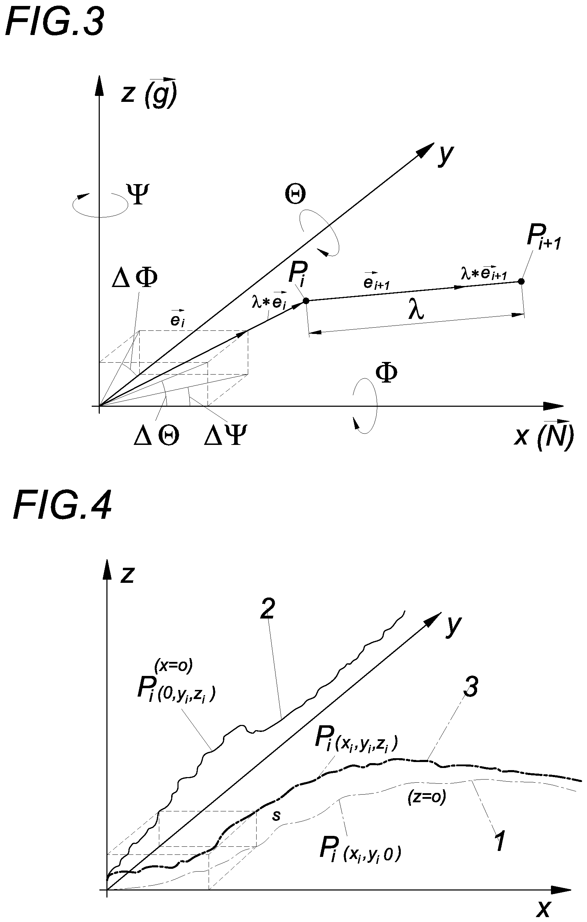

Fig. 3 zeigt schematisch ein nordbasiertes Koordinatensystem. Die x-Achse zeigt nach Norden N, die z-Achse verläuft parallel zur Gravitationsachse g. Drehungen um die x-Achse werden über den Rollwinkel Φ (Überhöhungswinkel) gemessen, Drehungen um die z-Achse entsprechen dem Richtungswinkel (Heading oder auch Gearwinkel oder als Yaw-Winkel bezeichnet) Ψ und Drehungen um die y-Achse liefern den Neigungswinkel (Pitch oder Nickwinkel) Θ. Zu Beginn der Messung werden die drei Differenzwinkel ΔΦ, ΔΨ und ΔΘ die die Richtung des Fahrzeugs zum nordbasierten Koordinatensystem bilden von der INS gemessen und geliefert. Der Einheitsvektor in Maschinenrichtung ergibt sich dann zu:

$$\vec{e_i} = \begin{pmatrix} cos\Psi \cdot cos\Theta \\ sin\Psi \cdot cos\Theta \\ sin\Theta \end{pmatrix}$$

Die Messung der INS wird über die gemessene Bogenlänge in äquidistanten Abschnitten λ (typisch 0,25 - 1 m) eingelesen. Der erste Datenpunkt $P_i$ wird dann einfach wie folgt errechnet:

$$\vec{P_i} = \lambda \cdot \vec{e_i}$$

Bei der nächsten Messung wird der neue Punkt $P_{i+1}$ durch Vektoraddition gebildet.

$$\vec{P_{i+1}} = \vec{P_i} + \lambda \cdot \vec{e_{i+1}}$$

So wird mit allen gemessenen Datenpunkten verfahren. Die zurückgelegte Wegstrecke (die Bogenlänge s) wird mit einem Odometer gemessen und mit aufgezeichnet und ergibt sich dann zu:

$$s_i = i \cdot \lambda$$

i    Anzahl der eingelesenen Datenpunkte

Da die äquidistante Messrate λ sehr kurz ist kann der Fehler der sich durch die Sekantenbildung ergibt vernachlässigt werden. Die Schiene kann innerhalb der typischen Messrate von 0,25-1m als Gerade angenommen werden. Die Wellenlänge der zu berücksichtigenden Fehler liegt typischerweise bei bis zu 100 m, daher kann auch ein sich eventuell aufsummierender Fehler vernachlässigt werden.

Fig. 4 zeigt schematisch in einem nordbasierten System die wie vorher beschriebenen 3D-Koordinatenlinie 3 mit Koordinatentripeln $P_i(x_i,y_i,zi)$. Durch Nullsetzen von z erhält man die Projektion dieser 3D-Koordinatenlinie auf die xy-Ebene, dem so genannten Ortsbild 1. Durch Nullsetzen von x erhält man die Projektion dieser 3D-Koordinatenlinie auf die yz-Ebene dem so genannten Neigungsbild 2. Das Ortsbild 1 zeigt den Verlauf des Gleises, die Geradenabschnitte, die Übergangsbogen bzw. die Lage der Vollbögen. Dieser Geometrie überlagert sind die Gleisrichtungsfehler. Das Längshöhenbild zeigt absolute Neigungen, die Neigungswechsel und überlagerte Höhenfehler. Zu jedem der gemessenen und aufgezeichneten Koordinatentripel $P_i$ wird die aktuelle Bogenlänge $s_i$ (Gleis km) als Parameter mit abgespeichert.

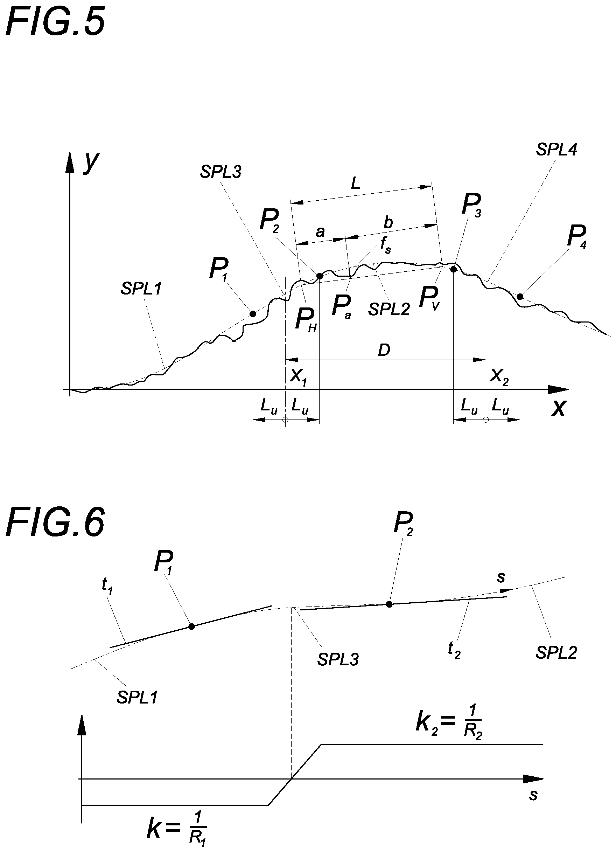

Fig. 5 zeigt schematisch ein Ortsbild (z=0). Zur Konstruktion einer Soll-Ortskurve Rs wird beispielhaft im Sinne der Erfindung die Ist-Ortskurve 3 in gleichmäßige Abschnitte D unterteilt. Für jeden Abschnitt D wird in einem ersten Schritt z.B ein ausgleichender kubischer Regressionsspline oder eine andere mathematischen Regressionskurve höherer Ordnung (nach der Methode der kleinsten Quadratsumme der Abweichungen) SPL1, SPL2 usw. gerechnet. Nachfolgend wird die Vorgangsweise für kubische Regressionssplines beispielhaft beschrieben. Ein kubischer Regressionsspline dritter Ordnung wird z.B. verwendet, damit auch ein Wendepunkt in der Gleisgeometrie richtig abgebildet werden kann (Bogenwechsel z.B. von einem Linksbogen auf einen Rechtsbogen). Die Länge der Abschnitte D wird entsprechend der Streckenklasse gewählt. Je schneller gefahren wird, desto größer die Radien und desto geringer die Gleisfehler. Bei höheren Streckenklassen werden daher auch längere Abschnitte D gewählt. Im nächsten Schritt werden um die $x_1$, $x_2$ Übergangslängen $L_u$ gewählt deren Länge ebenfalls nach der Streckenklasse gewählt wird. Die Regressionskurven sind nun so miteinander zu verbinden, dass sich ein stetiger Verlauf unter Randbedingungen ergibt. Diese Verbindungskurven SPL3 können mit mathematischen Ausgleichskurven höherer Ordnung hergestellt werden. Beispielhaft wird hier ein kubisches Ausgleichspolynom SPL3 beschrieben, aber auch andere mathematische Gleichungen sind möglich. Mit $x_1$ bzw. $x_2$ werden die Punkte auf dem berechneten Ausgleichungs-Spline (P1 aus Splinegleichung SPL1 und P2 aus Splinegleichung SPL2) berechnet. Zwischen den Punkten $P_1$ und $P_2$ werden nun kubische Polynome SPL3 unter den Anfangsbedingungen gerechnet wie dies in Fig. 6 vergrößert dargestellt wird. Für ein kubisches Übergangspolynom sind die Punkte P1 und P2 bekannt sowie die Steigungen $t_1$, $t_2$ in diesen Punkten der kubischen Regressionssplines. Durch diese Schritte ergibt sich ein duchgängiges glattes mathematisch eindeutig beschriebenes Soll-Ortsbild $R_S$. Differenziert man dieses Soll-Ortsbild $R_S$ zwei mal dann erhält man die Krümmung k=1/R der Soll-Lage wie sie bei der Eisenbahn verwendet wird. Dies ist ein großer Vorteil, weil man dadurch eine Soll-Geometrie ermittelt, die bei der nächsten Gleisinstandhaltungsarbeit wieder nutzbar ist. In Fig. 6 ist beispielhaft schematisch auch das Krümmmungsbild k(s) für die Sollgeometriekurve y(x) dargestellt. Nimmt man als kubisches Polynom den folgenden Ansatz:

$$y = a \cdot x^3 + b \cdot x^2 + c \cdot x + d$$

und für die Tangenten in den Endpunkten

$$t = 3 \cdot a \cdot x^2 + 2 \cdot b \cdot x + c$$

und für die Punkte P1 = $(x_1, y_1)$; P2 = $(x_2, y_2)$
dann können die Parameter a, b, c und d analytisch wie folgt berechnet werden:

$$a = \frac{2 \cdot (y_2 - y_1) - (x_2 - x_1) \cdot (t_2 + t_1)}{x_1^3 - x_2^3 + 3 \cdot x_1 \cdot x_2 \cdot (x_2 - x_1)}$$

$$b = \frac{t_2 - t_1 - 3 \cdot a \cdot (x_2 - x_1)}{2 \cdot (x_2 - x_1)}$$

$$c = t_1 - 3 \cdot a \cdot x_1^2 - 2 \cdot b \cdot x_1$$

$$d = y_1 - a \cdot x_1^3 - b \cdot x_1^2 - c \cdot x_1$$

Die Methode der kleinsten Quadrate für eine Regression mit einem kubischen Spline führt auf die folgenden vier Normalgleichungen:

$$n \cdot a_0 + \left(\sum_{i=1}^{n} x_i\right) \cdot a_1 + \left(\sum_{i=1}^{n} x_i^2\right) \cdot a_2 + \left(\sum_{i=1}^{n} x_i^3\right) \cdot a_3 = \sum_{i=1}^{n} y_i$$

$$\left(\sum_{i=1}^{n} x_i\right) \cdot a_0 + \left(\sum_{i=1}^{n} x_i^2\right) \cdot a_1 + \left(\sum_{i=1}^{n} x_i^3\right) \cdot a_2 + \left(\sum_{i=1}^{n} x_i^4\right) \cdot a_3 = \sum_{i=1}^{n} x_i \cdot y_i$$

$$\left(\sum_{i=1}^{n} x_i^2\right) \cdot a_0 + \left(\sum_{i=1}^{n} x_i^3\right) \cdot a_1 + \left(\sum_{i=1}^{n} x_i^4\right) \cdot a_2 + \left(\sum_{i=1}^{n} x_i^5\right) \cdot a_3 = \sum_{i=1}^{n} x_i^2 \cdot y_i$$

$$\left(\sum_{i=1}^{n} x_i^3\right) \cdot a_0 + \left(\sum_{i=1}^{n} x_i^4\right) \cdot a_1 + \left(\sum_{i=1}^{n} x_i^5\right) \cdot a_2 + \left(\sum_{i=1}^{n} x_i^6\right) \cdot a_3 = \sum_{i=1}^{n} x_i^3 \cdot y_i$$

n    Anzahl der Datenpunkte

Um die Koeffizienten $a_0$, $a_2$, $a_3$ und $a_4$ zu bestimmen muss das Gleichungssystem z.B. mit dem Gauß-Algorithmus oder nach der Cramer'schen Regel gelöst werden.

Der sich nach der Methode der kleinsten Quadrate ergebende kubische Regressionsspline hat dabei die Form:

$$y = a_0 + a_1 \cdot x + a_2 \cdot x^2 + a_3 \cdot x^3$$

In der schematischen Darstellung ist auch die Lage einer Sehne mit der Sehnenlänge L und den Sehnenabschnitten a und b eingezeichnet. Die Soll-Pfeilhöhe $f_s$ wird rechnerisch ermittelt.

Fig. 7 zeigt schematisch wie die Sollortskurve $R_S$ hinsichtlich eines Zwangspunktes $Z_P$ angeglichen werden kann. Zuerst wird wie oben gezeigt die Soll-Ortskurve $R_S$ aus den Punkten der Ist-Ortskurve $R_i$ gerechnet. Man geht einen Abstand $d_P$ vom Zwangspunkt zurück bzw. nach vor und überlagert einen Übergangsspline mit den Randbedingungen $P_1$, $t_1$ und $Z_P$, $t_2$'. Die Tangente $t_2$' wird dabei parallel zur Tangente $t_2$ gewählt. Der Anschluss nach vorne wird gleichermaßen gerechnet.

Dadurch wird die Soll-Ortskurve so abgeändert, dass sie stetig durch den Zwangspunkt $Z_P$ durchgeht. Die Verschiebung v errechnet sich dann zu $R_S$-$R_i$.

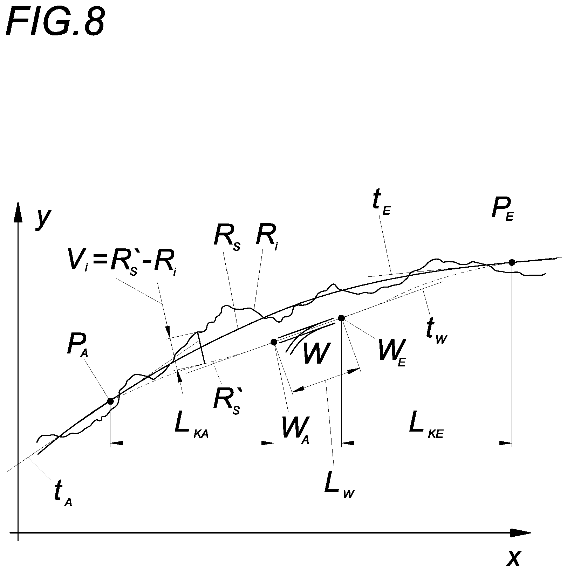

Fig. 8 zeigt schematisch eine Vorgangsweise der Anpassung der Soll-Ortskurve $R_S$ wenn eine Zwangslage W eingehalten werden muss. Das Beispiel zeigt eine Weiche (der Länge $L_W$) in die die Soll-Ortskurve tangential hinein- ($W_A$) und herauslaufen ($W_E$) soll. Dazu werden die Punkte der bisher gerechneten Soll-Ortskurve $P_A$ und $P_E$ bestimmt. Hier wird wieder wie oben ein kubischer Spline gerechnet dessen Anfangs- ($t_A$, $t_W$) und Endtangenten ($t_E$, $t_W$) und Anfangs- ($P_A$, $W_E$) und Endpunkte ($W_A$, $P_E$) vorgegeben werden. $L_{kA}$ und $L_{kE}$ werden so gewählt, dass sich zwischen der neuen Soll-Ortskurve ($R_S$') nur stetige, den Fahrzeuglauf nicht merkbar beeinflussende, Abweichungen von der vorhergehenden Soll-Ortskurve ($R_S$) aufweist. Über die sich so ergebende finale Soll-Ortskurve ($R_S$') wird dann die Sehne der Oberbaumaschine numerisch bewegt - dies ergibt als Resultat den Soll-Pfeilhöhenverlauf. Die Abweichungen zwischen Soll- ($R_S$') und Ist-Ortskurve ($R_i$) liefern die Korrekturwerte für die Richtung.

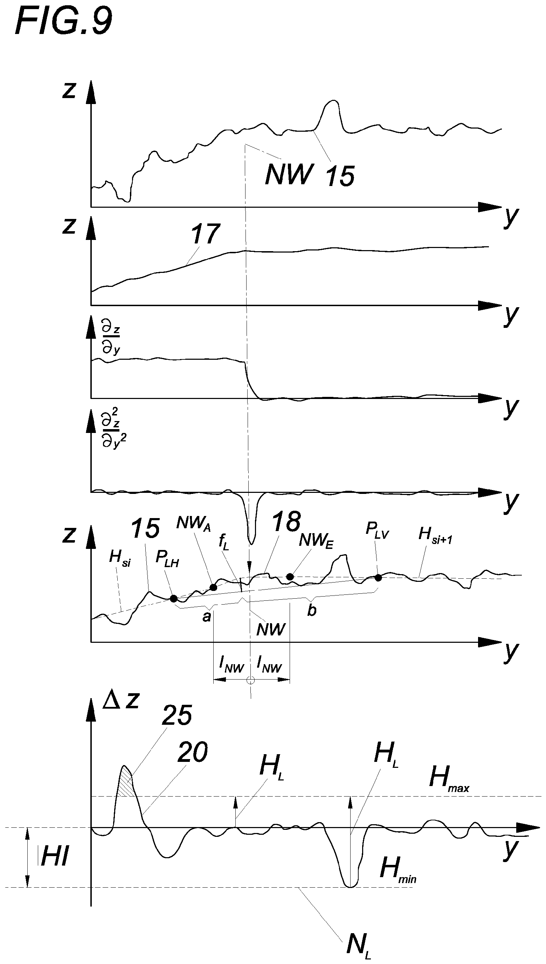

Fig. 9 zeigt schematisch das Ist-Höhenbild (x=0) 15. Neigungswechsel NW sind durch Knicke im Höhenverlauf zu erkennen. Zwischen den Neigungswechseln (konstante Steigung oder Gefälle) werden z.B. Regressionsfunktionen gerechnet (z.B. lineare Regressionsgerade). Auch andere Regressionsfunktionen können angewendet werden. Im Folgenden wird beispielhaft das Verfahren basierend auf linearen Regressionsgeraden beschrieben. Um die Lage der Neigungswechsel genauer zu bestimmen wird zuerst das Höhenbild 15 mit einem digitalen Filter so gefiltert, dass die kurwelligen Anteile weggefiltert werden (bis z.B. 50 m Wellenlänge). Daraus erhält man einen glatten Höhenverlauf 17. Dieser gefilterte Höhenverlauf 17 wird zwei mal numerisch differenziert. Durch die zwei malige Differentiation entsteht bei den Neigungswechseln eine deutliche Spitze die leicht zu detektieren ist. Der Maximalwert (größte Steigung beim Neigungswechsel Mitte) gibt die Lage des Neigungswechsels an.

Von dieser so bestimmten Lage der Neigungswechsel NW werden links und rechts im Abstand Ausrundungsradien (Länge typisch 6 m) die Punkte $NW_A$ und $NW_E$ die auf den Regressionsgeraden liegen bestimmt. Diese Punkte werden dann z. B. durch kubische Splines 18 verbunden. Als Randbedingungen für diese kubischen Splines 18 gelten Tangenten der Regressionsgeraden in den Punkten $NW_A$ und $NW_E$ und die Punkte $NW_A$ und $NW_E$ selbst. Als Ergebnis erhält man ein Soll-Längshöhenbild Hs. Auf dem Soll-Längshöhenbild $H_S$ wird dann die Sehne L, a, b der Oberbaumaschine numerisch längs der Kurve bewegt - dies ergibt als Resultat dann die Soll-Längshöhen $f_L$. Die Abweichungen zwischen Soll- und Ist-Längshöhenbild liefern die Korrekturwerte für die Höhe $\Delta$ z.

Das untere Diagramm zeigt wie aus den Abweichungen $\Delta z$ Hebewerte ermittelt werden. Die Oberbaumaschine kann nur Hebungen und keine Setzungen (negatives Vorzeichen der Korrekturwerte) 20 durchführen. Daher wird im Bereich der linearen Regressionsgeraden die größte negative Korrektur |H| ermittelt. Dieser Wert wird zu allen ermittelten Korrekturwerten addiert. Es ergibt sich eine neue Null-Linie $N_L$. Damit werden alle Korrekturwerte $H_L$ positiv und können durch die Oberbaumaschine durchgeführt werden. Übersteigen die so ermittelten Hebe-Korrekturwerte (25) die maximal zulässige Hebung $H_{max}$, dann wird der Bereich der Überschreitung einfach auf den maximalen Hebewert begrenzt (schraffierter Bereich).

**Patentansprüche**

1. Verfahren zum Messen und Berechnen einer Gleislage mit einem gleisfahrbaren Gleismesswagen (A) mit wenigstens zwei an einem Maschinenrahmen (21) abgestützten Radachsen, und mit einer Vorrichtung (10) zum Anpressen der Räder (1) an die Schiene (12), **dadurch gekennzeichnet, dass** zunächst eine Messfahrt mit dem, mit einer inertialen Navigationseinheit (INS, 5) ausgestatteten, gleisfahrbaren Gleismesswagen (A) durchgeführt wird, dessen Räder (1) an die Schienen (12) angepresst werden, wobei eine Bogenlänge (s) der Schiene (12) mit einem Odometer (24) gemessen wird, die Winkellage ($\Delta\Psi$, $\Delta\Phi$, $\Delta\Theta$) der inertialen Navigationseinheit (INS, IMU, 5) gegenüber einem kartesischen Bezugskoordinatensystem (x, y, z) gemessen und abgespeichert werden, und dass nach der Messfahrt Koordinatenpunkte (Pi) der Spur ($\lambda$, $\vec{e_i}$, $P_i$) der Navigationseinheit (INS, 5) im Raum aus den abgespeicherten Winkellagen ($\Delta\Psi$, $\Delta\Phi$, $\Delta\Theta$) mittels Ausgleichsrechnung errechnet werden und aus den derart optimierten Koordinatenpunkten ($P_i$) der Spur ($\lambda$, $\vec{e_i}$, $P_i$) durch Nullsetzen der z-Komponenten ein Ortsbild (1) und durch Nullsetzen der x-Komponenten ein Längsschnitt (2) gebildet werden, wonach durch die Koordinatenpunkte ($P_i$) eine mittels mathematischer Verbindungsfunktionen bestimmte Kurve gelegt wird.

2. Verfahren nach Anspruch 1, **dadurch gekennzeichnet, dass** durch die Koordinatenpunkte ($P_i$) Regressionsfunktionen höheren Grades (SPL1, SPL2) gelegt werden und die aneinandergrenzenden Regressionsfunktionen innerhalb eines Bereiches ($L_u$) mit einer mathematischen Verbindungsfunktion höheren Grades (SPL3) derart miteinander verbunden werden, dass diese mathematische Verbindungsfunktion (SPL2) durch die Endpunkte ($P_1$, $P_2$) der Regressionsfunktionen (SPL1, SPL2) und deren Endtangenten ($t_1$, $t_2$) verlaufen,
wonach eine Soll-Ortskurve bei randbedingungsbildenden Zwangspunkten ($Z_P$) durch die Überlagerung einer Winkelkorrektur ($\Delta\varphi$) eingepasst wird und randbedingungsbildende Zwangslagen (W) am Anfang ($W_A$) und Ende (W, $L_W$) mittels mathematischer Verbindungsfunktionen höherer Ordnung (22, 23) über eine Übergangslänge ($L_{kA}$, $L_{kE}$) eingepasst werden.

3. Verfahren nach Anspruch 1 oder 2, **dadurch gekennzeichnet, dass** für randbedingungsbildende Zwangslagen (W) und Zwangspunkte ($Z_P$) Toleranzen vorgegeben werden.

4. Verfahren nach einem der Ansprüche 1 bis 3, **dadurch gekennzeichnet, dass** im Längsschnitt (2), nämlich dem Höhenbild (15), Neigungswechsel (NW) ermittelt werden und für Abschnitte zwischen den Neigungswechseln Regressionsfunktionen ($H_{Si}$) gerechnet werden, dass für eine Soll-Höhenkurve ($H_{Si}$) die Neigungswechselübergänge ($NW_A$, $NW_E$) durch mathematische Übergangsfunktionen gebildet werden, und dass, damit die Hebekorrekturen positiv definit sind, die gesamte Korrekturlinie (20) um den größten Wert der "Setzung" (H) angehoben bzw. der Absolutbetrag (|H|) dazu addiert wird, wobei Werte (25) die den maximal zulässigen Hebewert ($H_{max}$) überschreiten abgeschnitten und nicht ausgeführt werden.

5. Verfahren nach einem der Ansprüche 1 bis 4, **dadurch gekennzeichnet, dass** eine Arbeitssehne (a,b, $P_H$, $P_a$, $P_v$) einer Oberbaumaschine rechnerisch über eine Soll-Ortskurve und einen Soll-Höhenverlauf bewegt wird und dabei eine Soll-Pfeilhöhe ($f_S$) für die Richtung und eine Soll-Längshöhe ($f_L$, $P_{Lh}$, $P_{Lv}$, L, a, b) errechnet werden, wobei die Differenzen zwischen Soll-Ortskurve ($R_S$) und Ist-Ortskurve ($R_i$) die Korrekturwerte für die Richtung (v) und die Differenzen zwischen Soll-Höhenverlauf und Ist-Höhenverlauf die Korrekturen ($H_L$) für die Hebung ergeben, womit die für eine Steuerung der Oberbaumaschine nach einem 3-Punkt-Präzisionsverfahren notwendige Steuersignale (v, $H_L$, sowie $f_S$ und $f_L$) dem Steuerungssystem der Oberbaumaschine übergeben weden.

6. Verfahren nach einem der Ansprüche 1 bis 5, **dadurch gekennzeichnet, dass** die analytische mathematische Darstellung einer Soll-Ortskurve (SPL1, SPL2, SPL3) zweimal differenziert wird und dass die sich daraus ergebende Krümmung (1/R) abhängig von der Bogenlänge als übliches Krümmungsbild ($k_1$, $k_2$) und die Soll-Höhe ($H_S$) ebenfalls zweimal differenziert wird und als Höhenkrümmungsbild abhängig von der Bogenlänge dargestellt wird.

7. Verfahren nach einem der Ansprüche 1 bis 6, **dadurch gekennzeichnet, dass** hinter der Oberbaumaschine ein Gleismesswagen (A) mit inertialem Navigationssystem oder inertialem Messsystem (INS; 5) nachgezogen wird und die Gleislagefehler ($H_L$, v), der Überhöhungsfehler ($\Delta u$) und der Spurweitenfehler ($\Delta SPW$) in einem Abnahmeschrieb als verbleibende Restfehler nach der Arbeit aufgezeichnet werden.

8. Vorrichtung zur Messung einer Gleislage mit einem gleisfahrbaren Gleismesswagen (A) mit wenigstens zwei an einem Maschinenrahmen (21) abgestützten Radachsen, und mit einer Vorrichtung (10) zum Anpressen der Räder (1) an ein Gleises mit zwei Schienen (12),**dadurch gekennzeichnet, dass** der Gleismesswagen (A) im Bereich gegenüberliegender Längsseiten je wenigstens zwei, je einer Schiene zugeordneten Räder (1) umfassende, Radgruppen aufweist, die zueinander um eine Gleismesswagenquerachse (4) drehbar gelagert sind, und dass der Gleismesswagen (A) mit einer inertialen Navigationseinheit (INS, 5), und einem Odometer (24) zur Messung einer Bogenlänge (s) der Schiene (12) ausgestattet ist.

9. Vorrichtung nach Anspruch 8, **dadurch gekennzeichnet, dass** die Vorrichtung zum Anpressen der Räder (1) an die Schiene (12) einen Stelltrieb umfasst, mit dem die Radgruppen in Richtung der Gleismesswagenquerachse (4) zur Anpressung von Radkränzen der Räder (1) an Innenflanken der Schienenköpfe verschiebbar sind.

10. Vorrichtung nach Anspruch 9, **dadurch gekennzeichnet, dass** ein der Gleismesswagenquerachse (4) zugeordneter Sensors 7 zur Messung der Spurweite (SPW) vorgesehen ist.

**Claims**

1. Method for measuring and calculating a track position, having a track-mountable track measuring carriage (A) having at least two wheel axles supported on a machine frame (21), and having a device (10) for pressing the wheels (1) against the rail (12), **characterised in that** firstly a measuring run is carried out with the track-mountable track measuring carriage (A) which is equipped with an inertial navigation unit (INS, 5) and of which the wheels (1) are pressed against the rails (12), wherein an arc length (s) of the rail (12) is measured with an odometer (24), the angular position ($\Delta\psi$, $\Delta\Phi$, $\Delta\Theta$) of the inertial navigation unit (INS, IMU, 5) is measured and stored relative to a Cartesian reference coordinate system (x, y, z), and **in that** after the measuring run coordinate points ($P_i$) of the track ($\lambda \vec{e_i}$, $P_i$) of the navigation unit (INS, 5) are calculated in space from the stored angular positions ($\Delta\psi$, $\Delta\Phi$, $\Delta\Theta$) by means of compensation calculation and from the thus optimised coordinate points (Pi) of the track ($\lambda \vec{e_i}$, $P_i$) a location image (1) is formed by zeroing the z-components and a longitudinal section (2) is formed by zeroing the x-components, after which a curve determined by means of mathematical connection functions is plotted through the coordinate points ($P_i$).

2. Method as claimed in claim 1, **characterised in that** higher-order regression functions (SPL1, SPL2) are plotted through the coordinate points ($P_i$) and the adjoining regression functions are connected to one another within a region ($L_u$) with a higher-order mathematical connection function (SPL3) in such a way that this mathematical connection function (SPL2) passes through the end points ($P_1$, $P_2$) of the regression functions (SPL1, SPL2) and their end tangents ($t_1$, $t_2$), after which a target locus is fitted at boundary condition-forming constraint points ($Z_P$) by the superimposition of an angle correction ($\Delta\varphi$) and boundary condition-forming constraint positions (W) at the beginning ($W_A$) and end (W, $L_W$) are fitted by means of higher-order mathematical connection functions (22, 23) over a transition length ($L_{kA}$, $L_{kE}$).

3. Method as claimed in claim 1 or 2, **characterised in that** tolerances are specified for boundary condition-forming constraint positions (W) and constraint points ($Z_P$).

4. Method as claimed in any one of claims 1 to 3, **characterised in that** inclination changes (NW) are ascertained in the longitudinal section (2), namely the height image (15), and regression functions ($H_{SI}$) are calculated for sections between the inclination changes, **in that** for a target height curve ($H_{SI}$) the inclination change transitions ($NW_A$, $NW_E$) are formed by mathematical transition functions, and **in that**, in order for the lifting corrections to be positively definite, the entire correction line (20) is raised by the largest value of the "setting" (H) or the absolute value (|H|) is added thereto, wherein values (25) which exceed the maximum permissible lifting value ($H_{max}$) are cut off and not executed.

5. Method as claimed in any one of claims 1 to 4, **characterised in that** a working chord (a, b, $P_H$, $P_a$, $P_v$) of a permanent-way machine is computationally moved over a target locus and a target height profile and thereby a target arrow height ($f_S$) is calculated for the direction and a target longitudinal height ($f_L$, $P_{Lh}$, $P_{Lv}$, L, a, b), wherein the differences between the target locus ($R_S$) and the actual locus ($R_i$) yield the correction values for the direction (v) and the differences between the target height profile and the actual height profile yield the corrections ($H_L$) for the lifting, whereby the control signals (v, $H_L$, as well as $f_S$ and $f_L$) required for controlling the permanent-way machine according to a 3-point precision method are transferred to the control system of the permanent-way machine.

6. Method as claimed in any one of claims 1 to 5, **characterised in that** the analytical mathematical representation of a target locus (SPL1, SPL2, SPL3) is differentiated twice and **in that** the resulting curvature (1/R) depending on the arc length is displayed as a conventional curvature image ($k_1$, $k_2$) and the target height ($H_S$) is likewise differentiated twice and is displayed as a height curvature image depending on the arc length.

7. Method as claimed in any one of claims 1 to 6, **characterised in that** a track measuring carriage (A) with an inertial navigation system or inertial measuring system (INS; 5) is pulled behind the permanent-way machine and the track position errors ($H_L$, v), the superelevation error ($\Delta u$) and the track gauge error ($\Delta SPW$) are recorded in an acceptance record as remaining residual errors after work.

8. Device for measuring a track position, having a track-mountable track measuring carriage (A) having at least two wheel axles supported on a machine frame (21), and having a device (10) for pressing the wheels (1) against a track having two rails (12), **characterised in that** the track measuring carriage (A), in the region of opposite longitudinal sides, has in each case at least two wheel groups comprising wheels (1) which are each associated with a rail and which are mounted so as to be able to rotate mutually about a track measuring carriage transverse axis (4), and **in that** the track measuring carriage (A) is equipped with an inertial navigation unit (INS, 5) and an odometer (24) for measuring an arc length (s) of the rail (12).

9. Device as claimed in claim 8, **characterised in that** the device for pressing the wheels (1) against the rail (12) comprises an actuating drive, with which the wheel groups are displaceable in the direction of the track measuring carriage transverse axis (4) for pressing wheel rims of the wheels (1) against inner flanks of the rail heads.

10. Device as claimed in claim 9, **characterised in that** a sensor (7) associated with the track measuring carriage transverse axis (4) is provided for measuring the track gauge (SPW).

**Revendications**

1. Procédé pour mesurer et calculer une voie ferrée, comportant un chariot de mesure de voie (A) pouvant se déplacer sur la voie ferrée, présentant au moins deux essieux de roue supportés au niveau d'un cadre de machine (21), et avec un dispositif (10) servant à comprimer les roues (1) au niveau du rail (12), **caractérisé en ce qu'**il est tout d'abord réalisé un parcours de mesure avec le chariot de mesure de voie (A) pouvant se déplacer sur la voie ferrée, équipé d'une unité de navigation (INS, 5) inertielle, dont les roues (1) sont pressées contre les rails (12), une longueur de l'arc (s) du rail (12) étant mesurée avec un odomètre (24), la position angulaire ($\Delta\Psi$, $\Delta\Phi$, $\Delta\Theta$) de l'unité de navigation (INS, IMU, 5) inertielle étant mesurée et enregistrée par rapport à un système de coordonnées de référence (x, y, z) cartésien et **en ce qu'**après le parcours de mesure, des points de coordonnées ($P_i$) de la trajectoire ($\lambda$, $\vec{e_i}$, $P_i$) de l'unité de navigation (INS, 5) dans l'espace sont calculés à partir des positions angulaires ($\Delta\Psi$, $\Delta\Phi$, $\Delta\Theta$) mémorisées au moyen d'un calcul compensatoire, et **en ce qu'**une image de position (1) obtenue à partir des points de coordonnées ($P_i$) ainsi optimisés de la trajectoire (A, $\vec{e_i}$, $P_i$) par mise à zéro des composants z, et une section longitudinale (2) obtenue par mise à zéro des composants x, sont formées, ce qui permet par la suite de placer une courbe déterminée au moyen de fonctions de liaison mathématiques par les points de coordonnées ($P_i$).

2. Procédé selon la revendication 1, **caractérisé en ce que** des fonctions de régression du degré (SPL1, SPL2) plus élevé sont posées par les points de coordonnées ($P_i$) et les fonctions de régression contiguës sont liées ensemble au sein d'une plage ($L_u$) avec une fonction de liaison mathématique du degré (SPL3) plus élevé, de telle sorte que cette fonction de liaison (SPL2) mathématique passe par les points finaux ($P_1$, $P_2$) des fonctions de régression (SPL1, SPL2) et leurs tangentes finales (t1, t2), ce qui permet par la suite d'ajuster un lieu géométrique théorique en présence de points obligatoires (Zp) formant des conditions marginales par la superposition d'une correction angulaire ($\Delta\varphi$) et d'ajuster des contraintes (W) formant des conditions marginales, au début (WA) et à la fin (W, Lw) au moyen de fonctions de liaison mathématiques d'un ordre (22, 23) plus élevé, sur une longueur de transition ($L_{kA}$, $L_{kE}$).

3. Procédé selon la revendication 1 ou 2, **caractérisé en ce que** des tolérances sont prédéfinies pour des contraintes (W) et des points obligatoires ($Z_P$) formant des conditions marginales.

4. Procédé selon l'une des revendications 1 à 3, **caractérisé en ce qu'**en section longitudinale (2), à savoir dans l'image de hauteur (15), des changements d'inclinaison (NW) sont déterminés, et pour des sections entre les changements d'inclinaison, des fonctions de régression (Hsi) sont calculées, **en ce que** pour une courbe de niveau théorique ($H_{SI}$), les transitions de changement d'inclinaison ($NW_A$, $NW_E$) sont formées par des fonctions de transition mathématiques, et **en ce que**, pour que les corrections d'élévation soient définies positives, la ligne de correction (20) complète est élevée de la valeur la plus grande de la « fixation » (H) ou le montant absolu (IHI) y est ajouté, les valeurs (25) qui dépassent la valeur d'élévation ($H_{max}$) maximale admise, sont tronquées et non réalisées.

5. Procédé selon l'une des revendications 1 à 4, **caractérisé en ce qu'**un tedon de service (a, b, $P_H$, $P_a$, $P_v$) d'une machine de superstructure est déplacé par calcul au-dessus d'un lieu géométrique théorique et un tracé de hauteur théorique et à l'occasion, une hauteur de flèche théorique (fs) pour la direction et une hauteur longitudinale théorique ($f_L$, $P_{LH}$, $P_{LV}$, L, a, b) sont calculées, les différences entre le lieu géométrique théorique ($R_s$) et le lieu géométrique ($R_i$) réel, fournissant les valeurs de correction pour la direction (v) et les différences entre le tracé de hauteur théorique et le tracé de hauteur réel, fournissant les corrections ($H_L$) pour l'élévation, grâce à quoi les signaux de commande (V, $H_L$ ainsi que fs et $f_L$) nécessaires pour un pilotage de la machine de superstructure d'après un procédé de précision trois points sont transmis au système de pilotage de la machine de superstructure.

6. Procédé selon l'une des revendications 1 à 5, **caractérisé en ce que** la représentation mathématique analytique d'un lieu géométrique (SPL1, SPL2, SPL3) théorique est différenciée deux fois et **en ce que** la courbure (1/R) qui en résulte, en fonction de la longueur de l'arc en tant qu'image de courbure ($k_1$, $k_2$) normale et la hauteur théorique (Hs) est également différenciée deux fois et est représentée en tant qu'image de courbure de hauteur en fonction de la longueur de l'arc.

7. Procédé selon l'une des revendications 1 à 6, **caractérisé en ce que** derrière la machine de superstructure, un chariot de mesure de voie (A) avec un système de navigation inertiel ou un système de mesure (INS, 5) inertiel est remorqué et les erreurs de position de voie ($H_L$, V), l'erreur de devers ($\Delta u$) et l'erreur de largeur de voie ($\Delta SPW$) sont enregistrées dans un écrit de réception en tant qu'erreur résiduelle restante après service.

8. Dispositif pour mesurer une voie ferrée, comportant un chariot de mesure de voie (A) pouvant se déplacer sur la voie ferrée présentant au moins deux essieux de roue supportés au niveau d'un cadre de machine (21), et avec un dispositif (10) servant à comprimer les roues (1) sur une voie avec deux rails (12), **caractérisé en ce que** le chariot de mesure de voie (A) comporte, dans la zone des cotés longitudinaux opposés, des groupes de roues, comprenant chacun au moins deux roues (1), chacune associée à un rail, qui peuvent pivoter les uns par rapport aux autres autour d'un axe transversal du chariot de mesure de voie (4) et **en ce que** le chariot de mesure de voie (A) est équipé d'une unité de navigation (INS, 5) inertielle et d'un odomètre (24) pour la mesure d'une longueur de l'arc (s) du rail (12).

9. Dispositif selon la revendication 8, **caractérisé en ce que** le dispositif pour comprimer les roues (1) au niveau du rail (12) comprend un mécanisme de commande, avec lequel les groupes de roues peuvent être déplacés en direction de l'axe transversal du chariot de mesure de voie (4) pour comprimer les couronnes de roue des roues (1) au niveau des flancs intérieurs des têtes de rail.

10. Dispositif selon la revendication 9, **caractérisé en ce qu'**un capteur (7) associé à l'axe transversal du chariot de mesure de voie (4) est prévu pour mesurer la largeur de voie (SPW).

FIG.1

## FIG.2

## FIG.7

FIG.3

FIG.4

# FIG.5

# FIG.6

# FIG.8

# FIG.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016090401 A1
- CN 105316986 A
- DE 10337976 B4
- DE 3227724 C2
- GB 2268021 B